# DEMANDE DE BREVET EUROPEEN

(11) **EP 0 684 745 A1**
(43) Date de publication de la demande: **29.11.1995**
(21) Numéro de dépôt: 95401187.0
(22) Date de dépôt: 22.05.1995
(51) Int. Cl.: H04Q 7/36

(54) **Station de contrôle pour une cellule sectorisée d'un réseau de radiocommunication**

(30) Priorité: 25.05.1994 FR 9406323
(71) Demandeur: ALCATEL MOBILE COMMUNICATION FRANCE, 75008 Paris (FR)
(72) Inventeur: Bursziejn, Jacques, c/o Alcatel Mobile Phones, F-92707 Colombes Cedex (FR); Chiodini, Alain, F-92100 Boulogne (FR); Kumar, Vinod, F-75005 Paris (FR)
(74) Mandataire: Renaud-Goud, Thierry

(57) **Abrégé**

La présente invention concerne une cellule sectorisée d'un réseau de radiocommunication, une station de contrôle pour cette cellule et une méthode d'allocation des ressources dans cette cellule.

La cellule forme un premier ensemble qui comprend un noyau (N) et plusieurs secteurs (S1,...,S4) diposés autour de ce noyau (N), la couverture de cette cellule étant assurée par des organes de transmission formant un second ensemble, les premier et second ensembles étant associés de manière biunivoque. Chaque secteur comprenant un coeur (C1,...,C4), au moins une section de séparation (AR1, AV2) figurant entre les coeurs de deux secteurs adjacents (S1, S2), la station de contrôle comprend un organe d'alllocation capable d'attribuer une même ressource aux coeurs (C1, C2) de ces deux secteurs adjacents (S1, S2).

## Description

La présente invention concerne une station de contrôle pour une cellule sectorisée d'un réseau de radiocommunication.

On va considérer à titre d'exemple les réseaux cellulaires dans lesquels un territoire géographique que le réseau doit desservir est subdivisé en cellules. Ce type de réseau présente l'avantage de pouvoir réutiliser une même ressource radio dans deux cellules distinctes pourvu que celles-ci ne soient pas adjacentes.

Cependant, dans une cellule donnée, il est souhaitable de minimiser le nombre de ressources nécessaires pour acheminer un trafic déterminé. Une démarche analogue à celle qui a permis la transition d'un réseau classique (sans réutilisation des ressources) à un réseau cellulaire conduit naturellement à envisager une réutilisation des ressources attribuées à une cellule au sein de cette même cellule. On doit alors subdiviser la cellule en zones et faire en sorte qu'une même ressource ne soit pas réutilisée dans deux zones adjacentes, toujours avec la préoccupation constante d'éviter les interférences.

Une solution applicable aux réseaux à accès multiple par répartition dans les fréquences (AMRF) est présentée dans la demande de brevet français FR 2 230 126. La solution consiste à partager la cellule de forme circulaire en un disque ayant même centre que la cellule, et en une couronne de rayon intérieur égal au rayon du disque et de rayon extérieur égal à celui de la cellule. Cette couronne est à nouveau partagée en secteurs égaux délimités par des rayons de la cellule. On conviendra de dénommer noyau ce disque intérieur de la cellule.

Les régles qui président à l'attribution des ressources, des fréquences en l'occurence, sont les suivantes. Les ressources sont réparties en trois groupes de sorte qu'une ressource quelconque n'appartienne qu'à un seul groupe. Les secteurs sont en nombre pair et sont numérotés consécutivement de sorte que le secteur de rang r est encadré par les secteurs de rang (r-1) et (r+1). Ainsi, le premier groupe de fréqence est attribué au noyau, le second aux secteurs de rang impair et le troisième aux secteurs de rang pair. On garantit bien qu'il n'y a pas d'interférences dans la cellule.

Il apparaît que pour réutiliser une même ressource n fois (dans n secteurs), il faut prévoir 2n secteurs et donc multiplier le nombre d'équipements nécessaires pour acheminer le trafic dans un secteur, notamment les organes de transmission.

On connait également la demande de brevet WO 93/10601 qui décrit une cellule comprenant un premier motif de secteurs couvrant la totalité de la cellule. Lorsqu'une même ressource doit être utilisée dans deux secteurs adjacents, il se pose un problème si cette ressource a pour destination la frontière de ces deux secteurs. On définit donc une section de séparation entre ces deux secteurs et, plus généralement, des sections de séparation couvrant les frontières de tous les secteurs du premier motif. En fait, ces sections de séparation définissent un second motif de secteurs décalé angulairement par rapport au premier motif.

Cependant, chaque secteur, qu'il appartienne au premier ou au second motif, est pourvu d'un organe de transmission propre. Il s'ensuit que l'on reproduit approximativement la méthode exposéee dans le document précédent.

La présente invention a ainsi pour objet une cellule sectorisée, une station de contrôle pour cette cellule et une méthode d'allocation des ressources dans cette cellule qui permet de réduire notablement le nombre d'équipements nécessaires pour la réutilisation d'une ressource donnée.

A cet effet, selon l'invention, la cellule formant un premier ensemble qui comprend un noyau et plusieurs secteurs diposés autour de ce noyau, la couverture de cette cellule étant assurée par des organes de transmission formant un second ensemble, les premier et second ensembles étant associés de manière biunivoque, chaque secteur comprenant un coeur, au moins une section de séparation figurant entre les coeurs de deux secteurs adjacents, la station de contrôle comprend un organe d'alllocation capable d'attribuer une même ressource aux coeurs de ces deux secteurs adjacents.

On a donc la faculté, en prenant certaines précautions, de réutiliser la même ressource dans deux secteurs adjacents, si bien qu'une même ressource peut être utilisée un nombre de fois égal à celui des secteurs.

Avantageusement, la cellule comprenant deux sections de séparation distinctes figurant de part et d'autre du coeur d'un secteur de référence, cet organe d'allocation est capable d'attribuer une même ressource à ces deux sections.

Il s'ensuit que la surface sur laquelle on peut pratiquer la réutilisation de ressources correspond à toute la couronne.

Par ailleurs, cet organe d'allocation est prévu pour attribuer des ressources distinctes à une section de séparation et aux coeurs qui jouxtent ces sections de séparation.

On garantit ainsi de réduire le niveau d'interférences à un niveau acceptable.

D'autre part, cette station de contrôle comprend un organe de signalisation pour distribuer les mêmes ressources de signalisation dans un secteur et dans une portion du noyau définie par le prolongement de ce secteur.

De plus, elle comprend un organe de localisation associé à cet organe de signalisation pour estimer, à partir d'une ressource de signalisation utilisée par un terminal, la position radiale de ce terminal afin d'établir s'il se trouve dans le secteur ou dans la portion de noyau.

En outre, le terminal étant répertorié dans ce secteur, ce secteur comprenant soit une bordure avant soit une bordure arrière soit une bordure avant et une bordure arrière, l'organe de localisation est également prévu pour estimer la position angulaire de ce terminal afin d'établir s'il se trouve dans la bordure avant, dans le coeur où dans la bordure arrière de ce secteur.

A cet effet, l'organe de transmission d'un secteur comprenant un réseau d'antennes à faisceau conformable et orientable disposé au centre de la cellule, la station de contrôle comprend un organe de commande pour commander cet organe de transmission de sorte que:
- soit le faisceau présente un angle large correspondant à celui du secteur pour acheminer les ressources de signalisation, permettant ainsi la localisation du terminal,
- soit le faisceau présente un angle étroit pour diriger les ressources de trafic dans l'une des deux bordures ou dans le coeur.

L'invention trouvera application notamment dans un réseau de radiocommunication numérique cellulaire fonctionnant selon l'accès multiple par répartition dans le temps dans lequel des ressources de signalisation distinctes sont attribuées à chacun des secteurs.

L'invention fournit également une méthode d'allocation de ressources dans une cellule de radiocommunication composée d'un noyau entouré de plusieurs secteurs, ce noyau et tous les secteurs étant chacun associé à un organe de transmission propre, chaque secteur comprenant un coeur, au moins deux sections de séparation figurant de part et d'autre du coeur d'un secteur de référence, méthode selon laquelle :
- une ressource est attribuable au noyau si elle n'est utilisée dans aucun des secteurs,
- une ressource est attribuable au coeur du secteur de référence si elle est déjà utilisée en dehors d'une première zone d'interférence composée du noyau et des deux sections de séparation adjacentes à ce coeur, et
- une ressource est attribuable à une section de séparation si elle est déjà utilisée en dehors d'une seconde zone d'interférence composée du noyau et des deux coeurs qui jouxtent cette section de séparation.

La présente invention sera maintenant explicitée dans le cadre de la description d'un mode de réalisation donné à titre d'exemple en se reportant aux figures annexées qui représentent:
- la figure 1 : une cellule sectorisée selon l'invention,
- la figure 2 : un réseau d'antennes pour la mise en oeuvre de l'invention.

Les éléments présents dans les deux figures porteront une seule et même référence.

Ce mode de réalisation sera présenté en relation avec les réseaux de radiocommunication cellulaires fonctionnant selon l'accès multiple par répartition dans le temps (AMRT), ce qui est notamment le cas des réseaux dits GSM ou équivalents. Dans ces réseaux le terme cellule a une acception bien précise à savoir qu'un territoire est subdivisée en cellules, une même ressource ne pouvant être utilisée simultanement dans deux cellules adjacentes.

Selon l'invention le terme cellule se réfère uniquement à une surface de couverture du réseau, ceci indépendamment de l'environnement de cette cellule, c'est-à-dire qu'elle soit entourée d'autres cellules ou qu'elle ne le soit pas. En fait, la cellule est caractérisée par les ressources qu'elle peut utiliser.

D'autre part les réseaux AMRT font appel à des fréquences porteuses chacune décomposée en trames temporelles successives. Une trame est elle-même décomposée en intervalles de temps consécutifs. Une ressource correspond donc à un intervalle de temps d'une porteuse particulière. Si l'on pratique le saut de fréquences, une ressource correspond alors à un intervalle de temps combiné à un plan de fréquence identifiant la porteuse en fonction du temps. L'invention s'applique naturellement à ces réseaux que l'on pratique le saut de fréquence ou qu'on ne le pratique pas, mais elle s'applique indépendamment du type de ressources. On pense par exemple aux systèmes AMRF.

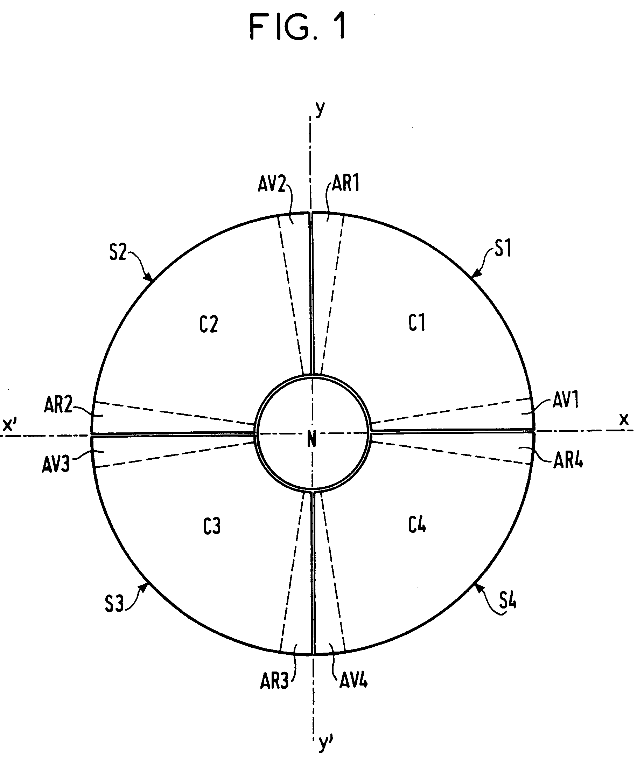

La cellule sectorisée selon l'invention est schématisée dans la figure 1 sous une forme sensiblement circulaire pour des raisons de simplicité. Il va sans dire que la structure hexagonale bien connue dans la représentation des réseaux cellulaires aurait également pu être adoptée.

Cette cellule comprend donc un noyau N qui se présente sous la forme d'un disque intérieur ayant le même centre que cette cellule. Elle comprend également une couronne périphérique dont le rayon intérieur est égal au rayon du noyau et dont le rayon extérieur est égal à celui de la cellule.

Cette couronne, telle que représentée, est subdivisée en quatre parties égales que l'on conviendra d'appeler secteurs. Ces secteurs sont délimités par deux axes x'x, y'y de la cellule faisant entre eux un angle de 90°.

Les axes, horizontaux et verticaux dans la figure 1, définissent donc quatre quadrants le premier situé en haut à droite, le second en haut à gauche, le troisième en bas à gauche et le quatrième en bas à droite.

Le premier secteur S1, disposé dans le premier quadrant, comprend une bordure avant AV1 délimitée par l'axe commun aux premier et quatrième quadrants et par un rayon de la cellule située dans ce premier quadrant relativement proche de cet axe. Il comprend également une bordure arrière AR1 délimitée par l'axe commun aux premier et deuxième quadrants et par un rayon de la cellule situé dans ce premier quadrant relativement proche de cet axe. Il comprend enfin un coeur C1 compris entre les bordures avant AV1 et arrière AR1.

Les deuxième S2, troisième S3 et quatrième S4 secteurs ont ici une forme identique à celle du premier secteur S1, si bien qu'ils sont chacun composé d'une bordure avant AV2, AV3, AV4 d'un coeur C2, C3, C4 et d'une bordure arrière AR2, AR3, AR4.

Le dimensionnement des secteurs est effectué selon les règles de l'art pour éviter tout risque d'interférence. Ainsi, un couple de bordure adjacentes, la bordure arrière AR1 du premier secteur et la bordure avant AV2 du deuxième secteur par exemple, présente des dimensions convenables pour réduire à un niveau acceptable de taux d'interférence entre les deux coeurs qui lui sont adjacents, le coeur C1 du premier secteur et celui C2 du deuxième secteur dans ce cas.

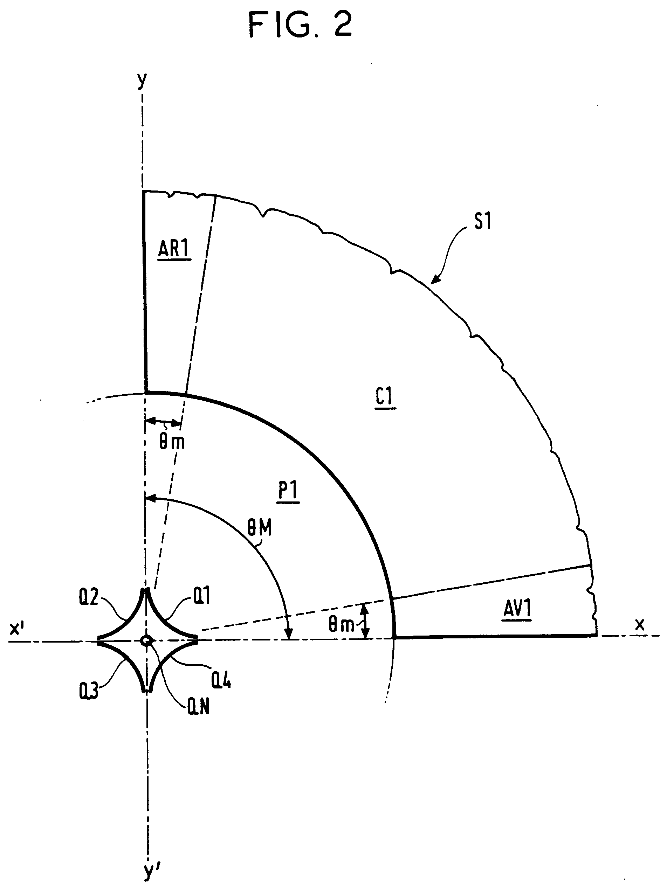

L'exploitation de cette cellule se fait avantageusement aux moyens d'un ensemble d'antennes disposé au centre du noyau N en référence à la figure 2.

On prévoit une antenne omnidirectionnelle QN et, pour chacun des quadrants, un réseau d'antennes Q1, Q2, Q3, Q4. Ainsi, le premier réseau d'antenne Q1 affecté au premier quadrant est un réseau à faisceau conformable et orientable bien connu de l'homme du métier.

Le faisceau est conformable, c'est-à-dire, que l'on peut faire varier son angle d'ouverture, étant entendu que l'angle maximal ϑ_{M} correspond sensiblement à celui du quadrant et que l'angle mininal ϑₘ correspond sensiblement à celui d'une bordure AV1, AR1. Le faisceau est de plus orientable de sorte qu'il puisse couvrir soit la totalité du premier quadrant, soit l'une des deux bordures AV1, AR1, soit le coeur C1. On remarquera que ce coeur C1 peut être couvert intégralement par un faisceau d'angle (ϑ_{M} - 2ϑₘ) ou bien par balayage d'un faisceau d'angle inférieur.

On observera également qu'une antenne à zéro orientable pourrait être utilisée dans certains cas pour éviter les interférences entre le noyau et un secteur. Cependant, ce type d'antennes n'apporte pas une solution générale au problème posé.

Bien que les réseaux à faisceau conformable et orientable représentent un mode de réalisation avantageux, il faut noter que l'on peut obtenir le même résultat par d'autres moyens.

A titre d'exemple, si ϑ_{M} vaut t fois ϑₘ, une solution alternative consiste à disposer t antennes unidirectionnelles d'angle ϑₘ agencées pour couvrir la totalité du quadrant. Il est également possible de prévoir une antenne directionnelle d'angle ϑₘ pour chacune des bordures AV1, AR1 et une antenne unidirectionnelle d'angle (ϑ_{M} - 2ϑₘ) pour le coeur C1. Etant donné la diversité des configurations possibles, on retiendra, pour généraliser, qu'un organe de transmission permet la désserte d'un quadrant ou du noyau.

Les deuxième Q2, troisième Q3 et quatrième Q4 réseaux d'antennes affectées respectivement aux deuxième, troisième et quatrième quadrants sont agencés dans ces quadrants de la même manière que le premier réseau Q1 l'est dans le premier quadrant. Ils ne seront donc pas plus détaillés.

On va maintenant décrire le fonctionnement de la cellule en référence au système GSM. On distinguera donc les ressources de signalisation nécessaires à l'établissement d'une communication et les ressources de trafic prévus pour l'acheminement des communications proprement dites.

Une station de contrôle prévue pour la cellule assure la commande de l'antenne omnidirectionnelle QN, des quatre réseaux d'antennes Q1, Q2, Q3, Q4 et des équipements associés.

La signalisation dans un quadrant, le premier par exemple, est assurée au moyen du réseau d'antennes correspondant, le premier Q1 dans ce cas. On rappelle que le quadrant comprend le secteur S1 et la portion P1 du noyau N adjacente à ce secteur et délimitée par les demi-axes formant ce quadrant.

Le trafic dans le noyau est assuré au moyen de l'antenne omnidirectionnelle QN tandis que dans chaque secteur, il est assuré au moyen du réseau d'antennes correspondant.

On fait maintenant l'hypothèse qu'un terminal est présent dans le premier quadrant.

La station de contrôle comprend un organe de localisation afin de déterminer si ce terminal figure dans la portion P1 de noyau, dans la bordure avant AV1, dans le coeur C1 ou bien dans la bordure arrière AR1. Cet organe de localisation, couplé au réseau d'antennes Q1 du premier quadrant, estime en premier lieu la distance du terminal au centre de la cellule.

Un moyen simple qui s'applique dans le GSM consiste à utiliser une information de signalisation qui est déjà prévue par le système. En effet, la signalisation émise à destination d'un terminal comprend une information d'avance temporelle ("Timing Advance" en anglais) que ce terminal doit appliquer à l'émission. Cette avance temporelle est directement liée à la distance du terminal puisqu'elle représente approximativement le temps nécessaire à l'émission d'un premier signal par la station de contrôle, sa transmission jusqu'au terminal, son traitement par le terminal, l'émission d'un second signal accusant réception du premier signal par le terminal, sa transmission jusqu'au premier réseau d'antenne Q1 et sa réception par la station de contrôle.

Ainsi lorsque cette avance temporelle est supérieure à un seuil prédéterminé, le terminal se trouve dans le premier secteur S1, tandis que dans le cas contraire, le terminal est dans la portion P1 de noyau en regard de ce secteur . A titre indicatif, compte-tenu des contraintes technologiques actuelles, il est possible de définir un noyau N dont le rayon minimal est de l'ordre de 300 mètres.

Un autre moyen consiste à mesurer l'atténuation d'un signal émis par le terminal, ce qui peut se faire en connaissant la puissance d'émission et en mesurant la puissance à la réception sur le réseau d'antennes.

L'invention s'applique naturellement quelque soit le moyen employé pour estimer cette distance.

Si le terminal est situé dans le premier secteur S1, il faut encore déterminer s'il est dans la bordure avant AV1, dans le coeur C1 ou dans la bordure arrière AR1 de ce secteur. Pour ce faire, l'organe de localisation comprend des moyens de détection angulaire du terminal. Ces moyens analysent un signal reçu sur le premier réseau d'antennes Q1 en provenance du terminal afin d'estimer l'angle d'arrivée de ce signal. Il s'agit là d'une technique connue de l'homme du métier qui ne sera donc pas plus développée.

La localisation se fait évidemment de la même manière dans chaque secteur.

Il convient maintenant d'aborder le problème de l'allocation des ressources de trafic.

Une première solution consiste à faire une allocation statique c'est-à-dire de prévoir trois groupes de ressources, chaque ressource appartenant à un groupe et à un seul. Le premier groupe est affecté au noyau, le second aux coeurs et le troisième aux bordures. Dans ce cas, lorsqu'il s'agit d'attribuer une ressource à un terminal, il suffit de choisir une ressource disponible dans le groupe correspondant à l'emplacement de ce terminal. On comprend bien que cette première solution n'est pas optimisée quant à l'utilisation des ressources.

Une deuxième solution consiste à répartir les ressources en deux groupes, le premier affecté au noyau, le second affecté à tous les secteurs. Dans ce cas, pour le noyau il suffit de sélectionner une ressource disponible dans le premier groupe, comme précédemment. Pour le coeur C1 du premier secteur il faut sélectionner une ressource du deuxième groupe qui ne soit pas utilisée dans une zone d'interférence comportant la bordure avant AV1 de ce secteur S1, la bordure arrière AR4 du secteur précédent S4, la bordure arrière AR1 du premier secteur et la bordure avant AV2 du secteur suivant S2. Dans l'une des deux bordures d'un couple formé par la bordure arrière AR1 du premier secteur et la bordure avant AV2 du deuxième secteur, il faut sélectionner une ressource du deuxième groupe qui ne soit pas utilisée dans une zone d'interférence comprenant les coeurs C1, C2 des premier et deuxième secteurs et l'autre bordure du couple. On généralise facilement la méthode à l'ensemble des secteurs.

Une troisième solution particulièrement avantageuse consiste à faire une allocation totalement dynamique des ressources. A titre d'exemple, on peut prévoir un tableau comprenant une ligne par ressource et une colonne pour chaque élément de la cellule c'est-à-dire une pour le noyau, une pour chaque couple de bordures adjacentes et une pour chaque coeur. Lorsque la iième ressource est utilisée dans le jième élément, un indicateur tel qu'un bit est positionné au croisement de la iième ligne et de la jième colonne du tableau. La méthode d'allocation est la suivante.

Dans le noyau, une ressource est attribuable si elle est disponible, c'est-à-dire si elle n'est pas utilisée dans l'un quelconque des éléments de la cellule.

Dans un coeur Ck, une ressource est attribuable si elle n'est utilisée ni dans ce coeur, ni dans le noyau N, ni dans le couple de bordures ARk-1, AVk, qui le précède, ni dans le couple de bordures ARk, AVk+1 qui le suit, même si elle est utilisée ailleurs dans la cellule.

Dans un couple de bordures adjacentes ARk, AVk+1 une ressource est attribuable si elle n'est utilisée ni dans ce couple ARk, AVk+1, ni dans le noyau N, ni dans le coeur Ck qui le précède, ni dans le coeur Ck+1 qui le suit.

L'allocation des ressources étant présentée, il s'agit de répondre aux questions qui peuvent se poser lorsque un terminal franchit la frontière entre deux éléments quelconque de la cellule.

Lorsque ce terminal quitte le noyau pour entrer dans l'un des secteurs, il faut changer l'organe de transmission auquel il est rattaché en conséquence. On peut, au choix, conserver la même ressource ou en attribuer une différente en respectant les régles précédemment établies.

Lorsque ce terminal quitte la bordure avant AV1 d'un secteur pour entrer dans le coeur C1 de ce secteur, on ne peut conserver la même ressource que si elle n'est pas utilisée dans le couple de bordures AR1, AV2 comprenant la bordure arrière AR1 de ce secteur. Dans le cas contraire, il faut changer de ressource en respectant les règles précédemment établies. On peut d'ailleurs décider de changer de ressource en tout état de cause.

Lorsque ce terminal quitte la bordure arrière AR1 d'un secteur pour entrer dans le coeur C1 de ce secteur, on ne peut conserver la même ressource que si elle n'est pas utilisée dans le couple de bordures AR4, AV1 comprenant la bordure avant AV1 de ce secteur. Dans le cas contraire, il faut changer de ressource en respectant les règles précédemment établies. On peut d'ailleurs décider de changer de ressource en tout état de cause.

Lorsque ce terminal quitte une bordure AR1 pour entrer dans la bordure adjacente AV2, il faut changer l'organe de transmission auquel il est rattaché en conséquence. On peut, au choix, conserver la même ressource ou en attribuer une différente en respectant les régles précédemment établies.

Lorsque ce terminal quitte le coeur d'un secteur pour entrer dans une bordure, on ne peut conserver la même ressource que si elle n'est pas utilisée dans le coeur du secteur adjacent à cette bordure. Dans le cas contraire, il faut changer de ressource en respectant les règles précédemment établies. On peut d'ailleurs décider de changer de ressource en tout état de cause.

Lorsque ce terminal quitte un secteur pour entrer dans le noyau, il faut changer l'organe de transmission auquel il est rattaché en conséquence. On peut, au choix, conserver la même ressource ou en attribuer une différente en respectant les régles précédemment établies.

Il va sans dire que le tableau d'allocation est remis à jour à chaque changement d'état d'une ressource, que celle-ci soit libérée, qu'elle change d'élément de la cellule ou qu'elle soit nouvellement affectée.

On remarquera que cette solution permet la plus grande souplesse quant à l'allocation des ressources. Elle permet également de minimiser le nombre des changements de ressource pour un terminal qui se déplace dans la cellule. Il s'agit là d'un avantage car ces procédures, connues sous le nom de "handover" intracellulaire sont pénalisantes pour la gestion du réseau.

Le mode de réalisation décrit en référence aux figures est donné à titre d'exemple. L'invention s'applique dans bien d'autres cas.

En premier lieu, l'invention peut être mise en oeuvre uniquement dans deux secteurs adjacents, si l'on préfère conserver un autre type de fonctionnement dans les autres secteurs.

En deuxième lieu, l'invention est indépendante tant du nombre de secteurs (deux au minimum) que de leurs dimensions. Un secteur peut avoir une taille quelconque, de même que son coeur, pourvu que les règles précédemment exposées soient respectées.

En troisième lieu, l'invention n'est pas liée au type de signalisation adopté. Les réseaux GSM qui imposent des contraintes sur l'allocation des ressources de signalisation ont été choisis comme cadre d'application à titre démonstratif.

Pour terminer, il convient de revenir sur la subdivision des différents secteurs. Pour des raisons de symétrie et dans un souci de clarification de l'exposé, on a choisi de décomposer chaque secteur en une bordure avant, un coeur et une bordure arrière, les deux bordures ayant sensiblement la même taille.

L'homme du métier comprend bien que l'on peut faire varier la taille des bordures sous réserve qu'un couple de bordures adjacentes présente une dimension suffisante vis-à-vis des interférences possibles entre les deux coeurs adjacents à ce couple. A titre d'exemple, en considérant le couple formé par la bordure arrière AR1 du premier secteur S1 et la bordure avant AV2 du deuxième secteur S2, on peut réduire ladite bordure arrière AR1 jusqu'à la supprimer sous réserve d'augmenter ladite bordure avant AV2 en conséquence. En fait, un couple de bordures adjacentes définit une section de séparation qui doit comprendre la limite de séparation entre les deux secteurs comprenant ces bordures, cette limite de séparation pouvant figurer à l'intérieur ou à une extrémité de la surface de séparation.

On peut même prévoir qu'un secteur déterminé n'ait pas de bordure du tout si les deux secteurs adjacents comprennent chacun une bordure adjacente à ce secteur déterminé. Par exemple, on peut supprimer les bordures avant AV1 et arrière AR1 du premier secteur S1 sous réserve de conserver la bordure avant AV2 du deuxième secteur S2 et la bordure arrière AR4 du quatrième secteur S4 et de dimensionner ces bordures de façon convenable.

Pour résumer, la mise en oeuvre de l'invention réside essentiellement dans les deux règles suivantes :
- changer l'organe de transmission lorsque le terminal se déplace du noyau vers un secteur, d'un secteur vers le noyau ou d'un secteur vers un autre secteur;
- ne pas affecter, respectivement ne pas conserver une ressource qui est déjà employée dans l'un quelconque des éléments adjacents à l'élément dans lequel se trouve, respectivement vers lequel se dirige le terminal.

## Revendications

**1/** Station de contrôle pour une cellule sectorisée d'un réseau de radiocommunication, ladite cellule formant un premier ensemble qui comprend un noyau (N) et plusieurs secteurs (S1,...,S4) diposés autour de ce noyau (N), la couverture de cette cellule étant assurée par des organes de transmission formant un second ensemble, lesdits premier et second ensembles étant associés de manière biunivoque, caractérisée en ce que, chaque secteur comprenant un coeur (C1,...,C4), au moins une section de séparation (AR1, AV2) figurant entre les coeurs de deux secteurs adjacents (S1, S2), elle comprend un organe d'alllocation capable d'attribuer une même ressource aux coeurs (C1, C2) desdits secteurs adjacents (S1, S2).

**2/** Station de contrôle selon la revendication 1 caractérisée en ce que, ladite cellule comprenant deux sections de séparation (AR4-AV1, AR1-AV2) distinctes figurant de part et d'autre du coeur (C1) d'un secteur de référence (S1), ledit organe d'allocation est capable d'attribuer une même ressource à ces deux sections.

**3/** Station de contrôle selon la revendication 1 ou 2, caractérisée en ce que ledit organe d'allocation est prévu pour attribuer des ressources distinctes à une section de séparation (AR1-AV2) et aux coeurs (C1, C2) qui jouxtent ces sections de séparation.

**4/** Station de contrôle selon l'une quelconque des revendications précédentes, caractérisée en ce qu'elle comprend un organe de signalisation pour distribuer les mêmes ressources de signalisation dans un secteur (S1) et dans une portion (P1) du noyau (N) définie par le prolongement dudit secteur.

**5/** Station de contrôle selon la revendication 4, caractérisée en ce qu'elle comprend un organe de localisation associé audit organe de signalisation pour estimer, à partir d'une ressource de signalisation utilisée par un terminal, la position radiale de ce terminal afin d'établir s'il se trouve dans ledit secteur (S1) ou dans ladite portion (P1) de noyau (N).

**6/** Station de contrôle selon la revendication 5, caractérisée en ce que, ledit terminal étant répertorié dans ledit secteur (S1), ce secteur comprenant soit une bordure avant (AV1) soit une bordure arrière (AR1) soit une bordure avant (AV1) et une bordure arrière (AR1), ledit organe de localisation est également prévu pour estimer la position angulaire de ce terminal afin d'établir s'il se trouve dans la bordure avant (AV1), dans le coeur (C1) où dans la bordure arrière (AR1) de ce secteur (S1).

**7/** Station de contrôle selon la revendication 6 caractérisée en ce que, l'organe de transmission d'un secteur (S1) comprenant un réseau d'antennes à faisceau conformable et orientable disposé au centre de la cellule, elle comprend un organe de commande pour commander ledit organe de transmission de sorte que :
- soit ledit faisceau présente un angle large correspondant à celui dudit secteur (S1) pour acheminer les ressources de signalisation permettant ainsi la localisation dudit terminal,
- soit ledit faisceau présente un angle étroit pour diriger les ressources de trafic dans l'une des deux bordures (AV1, AR1) ou bien dans le coeur (C1).

**8/** Utilisation de la station de contrôle selon l'une quelconque des revendications précédentes dans un réseau de radiocommunication numérique cellulaire fonctionnant selon l'accès multiple par répartition dans le temps dans laquelle des ressources de signalisation distinctes sont attribuées à chacun des secteurs.

**9/** Méthode d'allocation de ressources dans une cellule de radiocomunication, ladite cellule étant composée d'un noyau (N) entouré de plusieurs secteurs (S1,...,S4), ledit noyau et tous lesdits secteurs étant chacun associé à un organe de transmission propre, caractérisée en ce que,
chaque secteur comprenant un coeur (C1,...,C4), au moins deux sections de séparation (AR4-AV1, AR1-AV2) figurant de part et d'autre du coeur (C1) d'un secteur de référence (S1),
- une ressource est attribuable audit noyau (N) si elle n'est utilisée dans aucun desdits secteurs (S1,...,S4),
- une ressource est attribuable au coeur (C1) dudit secteur de référence (S1) si elle est déjà utilisée en dehors d'une première zone d'interférence composée dudit noyau (N) et des deux sections de séparation (AR4-AV1, AR1-AV2) adjacentes audit coeur (C1), et
- une ressource est attribuable à une section de séparation (AR1-AV2) si elle est déjà utilisée en dehors d'une seconde zone d'interférence composée dudit noyau (N) et des deux coeurs (C1, C2) qui jouxtent ladite section de séparation (AR1-AV2).
